# EUROPEAN PATENT APPLICATION

(11) **EP 4 682 181 A1**
(43) Date of publication of application: **21.01.2026**
(21) Application number: 24771002.3
(22) Date of filing: 15.03.2024
(51) Int. Cl.: C08F 222/34, C08J 5/18, C08L 33/18

(54) **COPOLYMER COMPOSITION, METHOD FOR PRODUCING SAME, AND MOLDED ARTICLE OBTAINED USING COPOLYMER COMPOSITION**

(30) Priority: 15.03.2023 JP 2023041341
(71) Applicant: Kuraray Co., Ltd., Kurashiki-shi, Okayama 710-0801 (JP)
(72) Inventor: INATOMI, Atsushi, Tsukuba-shi, Ibaraki 305-0841 (JP); IISHIBA, Kazuki, Tsukuba-shi, Ibaraki 305-0841 (JP)
(74) Representative: Müller-Boré & Partner Patentanwälte PartG mbB
(86) International application number: PCT/JP2024/010218
(87) International publication number: WO 2024/190900

(57) **Abstract**

A copolymer composition capable of providing a film or the like having good molding processability and excellent flex resistance, and a method for producing the same are provided. Further, a molded product, a film, a sheet, and a fiber using the copolymer composition are provided. A copolymer composition containing a copolymer (A) having a constitutional unit (a1) derived from 1,1-dicyanoethylene and a constitutional unit (a2) derived from a compound represented by general formula (I) below, in which a weight reduction rate is 5.0% by mass or less when held for 30 minutes at a temperature (T) at which a complex viscosity measured under conditions of a frequency of 1 Hz and a distortion of 1% becomes 10,000 Pa·s: CH₂=CR¹R² (I)

## Description

### Technical Field

The present invention relates to a copolymer composition containing a copolymer having a constitutional unit derived from 1,1-dicyanoethylene and a constitutional unit derived from a specific compound, a method for producing the same, and a molded product and the like using the same.

### Background Art

It is known that a copolymer composition containing a copolymer obtained by radical polymerization of 1,1-dicyanoethylene and a polymerizable monomer is suitably used as a material for a film, a filament, or the like (for example, PTL 1). Since the copolymer composition is excellent in transparency particularly when processed into a film, it has been used for a various material such as an optical member, a lighting member, a signboard member, and a decorative member.

### Citation List

### Patent Literature

PTL 1: US2,615,865B

### Summary of Invention

### Technical Problem

Since a copolymer having a constitutional unit derived from 1,1-dicyanoethylene has high cohesive force and high melt viscosity, it is necessary to increase the processing temperature, and there is a problem that deterioration occurs due to crosslinking or thermal decomposition when the temperature is excessively increased. Particularly, since the copolymer composition produced by the method described in PTL 1 contains a large amount of a low-molecular-weight compound having a molecular weight of less than 1,000, there is a problem that a gas due to the low-molecular-weight compound having a molecular weight of less than 1,000 is generated when heated, and the molding processability is reduced.

The present invention has been made in view of the conventional problems, and an object thereof is to provide a copolymer composition capable of providing a film or the like having good molding processability and excellent flex resistance, and a method for producing the same. Further, another object of the present invention is to provide a molded product, a film, a sheet, and a fiber using the copolymer composition.

### Solution to Problem

As a result of studies, the present inventors have found that, in a copolymer composition obtained by copolymerizing 1, 1-dicyanoethylene and a specific monomer, when the amount of a low-molecular-weight compound having a molecular weight of less than 1,000 contained in the copolymer composition is reduced, the molding processability is improved, and the deterioration of the copolymer composition can be suppressed, and as a result, the transparency and flex resistance of a film or the like using the copolymer composition are improved, thereby completing the present invention.

That is, the present invention provides the following [1] to [11].
[1] A copolymer composition containing a copolymer (A) having a constitutional unit (a1) derived from 1,1-dicyanoethylene and a constitutional unit (a2) derived from a compound represented by general formula (I) below, in which a weight reduction rate is 5.0% by mass or less when held for 30 minutes at a temperature (T) at which a complex viscosity measured under conditions of a frequency of 1 Hz and a distortion of 1% becomes 10,000 Pa·s:

   CH₂=CR¹R² (I)

   in which, in the general formula (I), R¹ represents one or more selected from a hydrogen atom, an alkyl group, a cycloalkyl group, an aryl group, an alkoxy group, and a halogen atom, and
   R² represents one or more selected from a hydrogen atom, an alkyl group, an alkoxy group, a carboxy group, an ester group represented by -COOR³, in which R³ represents an alkyl group having 1 to 12 carbon atoms, an acid anhydride group, an acyl group represented by - COR⁴, in which R⁴ represents an alkyl group having 1 to 12 carbon atoms, and an acyloxy group represented by -OCOR⁵, in which R⁵ represents an alkyl group having 1 to 12 carbon atoms.
[2] The copolymer composition according to [1], in which the copolymer (A) has a weight average molecular weight of 30,000 to 3,000,000.
[3] The copolymer composition according to [1] or [2], in which a content of a low-molecular-weight compound having a molecular weight of less than 1,000 is 10% by mass or less.
[4] The copolymer composition according to any of [1] to [3], in which a content of the constitutional unit (a1) in the copolymer (A) is 20 to 80 mol%.
[5] The copolymer composition according to any of [1] to [4], in which the copolymer (A) has a molecular weight distribution (Mw/Mn) of 1.0 to 10.0.
[6] The copolymer composition according to any of [1] to [5], in which the compound represented by the general formula (I) is one or more selected from the group consisting of vinyl ester, (meth)acrylic acid ester, a styrene derivative, ethylene, propylene, isobutylene, 1-pentene, 1-hexene, 3-methyl-1-butene, and 4-methyl-1-pentene.
[7] A molded product using the copolymer composition according to any of [1] to [6].
[8] A film or a sheet using the copolymer composition according to any of [1] to [6] and having a thickness of 0.0001 to 10.0 mm.
[9] The film or the sheet according to [8], having a total light transmittance of 75% or more.
[10] A fiber using the copolymer composition according to any of [1] to [6].
[11] A method for producing the copolymer composition according to any of [1] to [6], in which a product containing the copolymer (A) obtained by polymerization is washed with a solvent other than a solvent used for the polymerization of the copolymer (A).

### Advantageous Effects of Invention

According to the present invention, it is possible to provide a copolymer composition capable of providing a film or the like having good molding processability and excellent flex resistance, and a method for producing the same. Further, according to the present invention, it is possible to provide a molded product, a film, a sheet, and a fiber using the copolymer composition.

### Description of Embodiments

### [Copolymer Composition]

The copolymer composition of the present invention is a copolymer composition containing a copolymer (A) having a constitutional unit (a1) derived from 1,1-dicyanoethylene and a constitutional unit (a2) derived from a compound represented by general formula (I) below,
in which a weight reduction rate is 5.0% by mass or less when held for 30 minutes at a temperature (T) at which a complex viscosity measured under conditions of a frequency of 1 Hz and a distortion of 1% becomes 10,000 Pa·s.

   CH₂=CR¹R² (I)

   (in the general formula (I), R¹ represents one or more selected from a hydrogen atom, an alkyl group, a cycloalkyl group, an aryl group, an alkoxy group, and a halogen atom, and
R² represents one or more selected from a hydrogen atom, an alkyl group, an alkoxy group, a carboxy group, an ester group represented by -COOR³ (R³ represents an alkyl group having 1 to 12 carbon atoms), an acid anhydride group, an acyl group represented by -COR⁴ (R⁴ represents an alkyl group having 1 to 12 carbon atoms), and an acyloxy group represented by -OCOR⁵ (R⁵ represents an alkyl group having 1 to 12 carbon atoms).)

The copolymer composition of the present invention has a weight reduction rate of 5.0% by mass or less when held for 30 minutes at a temperature (T) at which a complex viscosity measured under conditions of a frequency 1 Hz and a distortion of 1% becomes 10,000 Pa·s. The weight reduction is caused by removal of the low-molecular-weight compound contained in the copolymer composition by volatilization up to the temperature (T). As a result, the amount of low-molecular-weight compound having a molecular weight of less than 1,000 in the copolymer composition is reduced. Therefore, even when the copolymer composition is heated during processing, the amount of gas generated is small, and deterioration due to thermal decomposition can be suppressed, so that the molding processability is improved. In addition, since deterioration of the copolymer composition can be suppressed, flex resistance is also improved, and further, transparency of a film or the like using the copolymer composition is also improved. From these viewpoints, the weight reduction rate is preferably 4.0% by mass or less, more preferably 3.0% by mass or less, further more preferably 2.5% by mass or less, still further more preferably 2.0% by mass or less, particularly preferably 1.5% by mass or less, particularly preferably 1.0% by mass or less, and particularly preferably 0.8% by mass or less.

Note that the weight reduction rate can be measured using a simultaneous thermogravimetric/differential thermal analyzer (TGA/DSC), and specifically, it can be measured by the method described in the Examples.

In the copolymer composition of the present invention, the temperature (T) at which the complex viscosity measured under conditions of a frequency of 1 Hz and a distortion of 1% becomes 10,000 Pa·s is preferably 120 to 300 °C, more preferably 125 to 280 °C, further more preferably 130 to 260 °C, and still further more preferably 140 to 240 °C. When the temperature (T) is within the above range, the molded product of the copolymer composition is improved.

Note that the temperature (T) can be measured by a rheometer.

### <Copolymer (A)>

The copolymer (A) used in the present invention has a constitutional unit (a1) derived from 1,1-dicyanoethylene and a constitutional unit (a2) derived from a compound represented by general formula (I) below.

### [Constitutional Unit (a1) Derived from 1,1-dicyanoethylene]

The copolymer (A) used in the present invention has a constitutional unit (a1) derived from 1,1-dicyanoethylene. Since 1,1-dicyanoethylene provides a copolymer having high transparency by radical polymerization, it can be suitably used as a material for a molded product or the like requiring transparency.

1,1-dicyanoethylene can be produced by a production method described in J. Am. Chem. Soc., 1989, 111, 9078 to 9081 or US2,476,270B.

### [Constitutional Unit (a2) Derived from Compound Represented by General Formula (I)]

The copolymer (A) used in the present invention has a constitutional unit (a2) derived from a compound represented by general formula (I) below.

CH₂=CR¹R² (I)

(In the general formula (I), R¹ represents one or more selected from a hydrogen atom, an alkyl group, a cycloalkyl group, an aryl group, an alkoxy group, and a halogen atom, and
R² represents one or more selected from a hydrogen atom, an alkyl group, an alkoxy group, a carboxy group, an ester group represented by -COOR³ (R³ represents an alkyl group having 1 to 12 carbon atoms), an acid anhydride group, an acyl group represented by -COR⁴ (R⁴ represents an alkyl group having 1 to 12 carbon atoms) and an acyloxy group represented by -OCOR⁵ (R⁵ represents an alkyl group having 1 to 12 carbon atoms).)

In the general formula (I), R¹ represents one or more selected from a hydrogen atom, an alkyl group, a cycloalkyl group, an aryl group, an alkoxy group, and a halogen atom.

The alkyl group of R¹ is preferably an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, an n-hexyl group, a heptyl group, an octyl group, a decyl group, and a dodecyl group.

The cycloalkyl group of R¹ is preferably a cycloalkyl group having 3 to 12 carbon atoms, and examples thereof include a cyclopropyl group, a cyclobutyl group, a cyclopentyl group, and a cyclohexyl group.

The aryl group of R¹ is preferably an aryl group having 6 to 20 carbon atoms, and examples thereof include a phenyl group, a tolyl group, a xylyl group, and a naphthyl group. Note that the aryl group in the present invention can have one or more substituent groups, and examples of the substituent group include an alkyl group such as a methyl group and an ethyl group, an acetoxy group, an acetyl group, and a halogen atom selected from a fluorine atom, a chlorine atom, a bromine atom, and an iodine atom.

The alkoxy group of R¹ is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

Examples of the halogen atom of R¹ include a fluorine atom, a chlorine atom, a bromine atom, and an iodine atom.

Among these, R¹ is preferably a hydrogen atom, an alkyl group having 1 to 6 carbon atoms, or an aryl group having 6 to 20 carbon atoms, more preferably a hydrogen atom, an alkyl group having 1 to 4 carbon atoms, or a phenyl group, and further more preferably a hydrogen atom, a methyl group, or a phenyl group.

In the general formula (I), R² represents one or more selected from a hydrogen atom, an alkyl group, an alkoxy group, a carboxyl group, an ester group represented by -COOR³ (R³ represents an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).

The alkyl group of R² is preferably an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, an n-hexyl group, a heptyl group, an octyl group, a decyl group, and a dodecyl group.

The alkoxy group of R² is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

R² can be an ester group represented by -COOR³, and R³ represents an alkyl group having 1 to 12 carbon atoms. Examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, an n-hexyl group, a heptyl group, an octyl group, a decyl group, and a dodecyl group.

Examples of the acid anhydride group of R² include an acid anhydride group derived from phthalic acid anhydride, maleic acid anhydride, trimellitic acid anhydride, pyromellitic acid anhydride, hexahydrophthalic acid anhydride, tetrahydrophthalic acid anhydride, methylnadic acid anhydride, nadic acid anhydride, glutaric acid anhydride, dimethylglutaric acid anhydride, diethylglutaric acid anhydride, succinic acid anhydride, methylhexahydrophthalic acid anhydride, and methyltetrahydrophthalic acid anhydride.

R² can be an acyl group represented by -COR⁴, and R⁴ represents an alkyl having 1 to 12 carbon atoms. Examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, an n-hexyl group, a heptyl group, an octyl group, a decyl group, and a dodecyl group.

R² can be an acyloxy group represented by -OCOR⁵, and R⁵ represents an alkyl group having 1 to 12 carbon atoms. Examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, an n-hexyl group, a heptyl group, an octyl group, a decyl group, and a dodecyl group.

Among these, R² is preferably one selected from the group consisting of a hydrogen atom, an alkyl group, an ester group represented by -COOR³, and an acyloxy group represented by -OCOR⁵, more preferably a hydrogen atom or an alkyl group having 1 to 6 carbon atoms, and further more preferably a hydrogen atom or an alkyl group having 1 to 4 carbon atoms.

More specifically, the compound represented by the general formula (I) is preferably one or more selected from the group consisting of vinyl ester, (meth) acrylic acid ester, a styrene derivative, ethylene, propylene, isobutylene, 1-pentene, 1-hexene, 3-methyl-1-butene, and 4-methyl-1-pentene, specifically, more preferably one or more selected from the group consisting of vinyl acetate, vinyl propionate, vinyl butyrate, vinyl isobutyrate, methyl methacrylate, methyl acrylate, ethyl acrylate, butyl acrylate, styrene, isobutylene, and propylene, and further more preferably one or more selected from the group consisting of vinyl acetate, vinyl butyrate, methyl methacrylate, styrene, isobutylene, and propylene. By using these compounds, it is possible to suppress discoloration more effectively.

The compound represented by the general formula (I) is easily available from commercial products, and can also be produced by a known method.

Note that in the present specification, "(meth) acrylic acid ester" means "acrylic acid ester or methacrylic acid ester".

The copolymer (A) can have two or more kinds of constitutional unit (a2) different from each other, and from the viewpoint of suppressing the production cost, the constitutional unit (a2) is preferably composed of two different kinds of constitutional unit of a constitutional unit (a21) derived from the compound represented by the general formula (I) and a constitutional unit (a22) derived from the compound represented by the general formula (I). When the constitutional unit (a2) is composed of two kinds of the constitutional unit (a21) and the constitutional unit (a22), the compound represented by the general formula (I) constituting each constitutional unit preferably contains at least one selected from the group consisting of vinyl acetate, vinyl propionate, vinyl butyrate, methyl methacrylate, styrene, isobutylene, and propylene.

### [Content of Each Constitutional Unit in Copolymer (A)]

The content of the constitutional unit (a1) in the copolymer (A) is preferably 20 to 80 mol%, more preferably 25 to 70 mol%, further more preferably 30 to 55 mol%, and still further more preferably 35 to 55 mol%.

On the other hand, the content of the constitutional unit (a2) is preferably 20 to 80 mol%, preferably 30 to 75 mol%, further more preferably 45 to 70 mol%, and still further more preferably 45 to 65 mol%.

When the content of each constitutional unit is within the above range, the molding processability of the copolymer composition is improved, and the flex resistance is improved.

Note that the content of each constitutional unit can be measured by ¹H-NMR, and specifically, can be measured by the method described in Examples.

### [Other Constitutional Units]

The copolymer (A) can contain a constitutional unit derived from a monomer other than the constitutional unit (a1) derived from 1,1-dicyanoethylene and the constitutional unit (a2) derived from the compound represented by the general formula (I).

When the copolymer (A) contains a constitutional unit derived from other monomers, the content thereof is preferably 20 mol% or less, more preferably 10 mol% or less, and further more preferably 5 mol% or less, in the copolymer.

### [Thermal Decomposition Temperature of Copolymer (A)]

The 5% thermal decomposition temperature of the copolymer (A) is preferably 200 °C or higher, more preferably 230 °C or higher, more preferably 240 °C or higher, more preferably 250 °C or higher, more preferably 270 °C or higher, more preferably 280 °C or higher, more preferably 290 °C or higher, and further more preferably 300 °C or higher. Note that the thermal decomposition temperature is determined by conducting thermal mass analysis (TG) of the copolymer in a nitrogen gas atmosphere at a temperature increase rate of 10 °C/minute according to JIS K7120:1987, and calculating the temperature at which the weight decreases by 5% with the weight at 30 °C as the origin. As a measurement apparatus, TGA/DSC1 manufactured by METTLER TOLEDO was used.

### [Complex Viscosity of Copolymer (A)]

The complex viscosity of the copolymer (A) is not particularly limited, and can be appropriately adjusted according to the processing method. The complex viscosity of the copolymer(A) is preferably 100,000 Pa·s or less, more preferably 50,000 Pa·s or less, more preferably 30,000 Pa·s or less, more preferably 20,000 Pa·s or less, and further more preferably 10,000 Pa·s or less, at a frequency of 1 Hz and a distortion of 1%, for the purpose of preventing a resin from being retained and deteriorated in a molding machine when producing a film by extrusion molding.

The complex viscosity can be adjusted by the molecular weight of the copolymer (A), and can be adjusted by using a copolymer (A) having a plurality of molecular weights. Note that the complex viscosity can be measured, for example, using DHR 2 manufactured by TA Instruments under the conditions of a frequency of 1 Hz, a distortion of 1%, and a temperature increase rate of 3 °C/minute in a nitrogen gas atmosphere, with the resin sandwiched between upper and lower parallel plates of a diameter of 8 mm.

### [Glass Transition Temperature of Copolymer (A)]

The glass transition temperature of the copolymer (A) is not particularly limited and can be appropriately selected depending on the application. From the viewpoint of increasing heat resistance, it is preferably 30 °C or higher, more preferably 50 °C or higher, further more preferably 70 °C or higher, and still further more preferably 75 °C or higher. Further, the glass transition temperature of the copolymer (A) is usually 200 °C or lower, more preferably 190 °C or lower, more preferably 180 °C or lower, more preferably 170 °C or lower, and further more preferably 160 °C or lower. When the glass transition temperature is equal to or less than the lower limit value, it becomes easy to set the molding temperature at a temperature lower than the thermal decomposition temperature, and it is easy to prevent the occurrence of defects such as foaming. Note that the glass transition temperature can be measured by a method according to JIS K7121:2012 using a differential scanning calorimeter.

### [Method for Producing Copolymer (A)]

The method for producing the copolymer (A) is not particularly limited, and the copolymer (A) is preferably produced, for example, at a polymerization temperature of 70 °C or lower, and further, in the presence of a radical initiator. By performing the production under the above conditions, deterioration of the copolymer composition can be suppressed. From this viewpoint, the polymerization temperature is preferably 65 °C or lower, and more preferably 60 °C or lower.

### (Radical Polymerization Initiator)

Examples of the radical polymerization initiator used in the production of the copolymer (A) include an azo compound such as azobisisobutyronitrile, 2,2'-azobis (4-methoxy-2,4-dimethylvaleronitrile), 2,2'-azobis [2-(2-imidazoline-2-yl) propane], and 2,2'-azobis [N-(2-carboxyethyl)-2-methylpropionamidine] hydrate; inorganic peroxide such as sodium persulfate, potassium persulfate, and hydrogen peroxide; organic peroxide such as t-butyl hydroperoxide, cumene hydroperoxide, and p-menthane hydroperoxide; and a redox initiator obtained by combining an oxidizing agent and a reducing agent such as hydrogen peroxide and an iron (II) salt, and a persulfate and sodium hydrogen sulfite. These can be used alone or in combination of two or more thereof.

Among these radical polymerization initiators, an azo compound such as azobisisobutyronitrile and 2,2'-azobis (4-methoxy-2,4-dimethylvaleronitrile), a redox initiator, and the like, which are easily used at a low temperature, are preferable.

The use amount of the radical polymerization initiator is preferably 0.01 to 10 parts by mass, more preferably 0.05 to 5 parts by mass, and further more preferably 0.08 to 3 parts by mass, with respect to 100 parts by mass of all monomers serving as raw materials of the copolymer (A).

### (Ratio of Charged Amounts in Production of Copolymer (A))

In the production of the copolymer (A), the charged amount of the compound represented by the general formula (I) is preferably 0.9 equivalents or more, and more preferably 1.0 equivalent or more, with respect to the charged amount of 1,1-dicyanoethylene, and usually preferably 5.0 equivalents or less from the viewpoint of the transparency of the film and the sheet. When the charged amount of the compound represented by the general formula (I) with respect to the charged amount of 1,1-dicyanoethylene is equal to or more than the lower limit value, the reaction can be efficiently performed.

### [Content of Copolymer (A) in Copolymer Composition]

The content of the copolymer (A) in the copolymer composition of the present invention is preferably 80% by mass or more, more preferably 85% by mass or more, and further more preferably 90% by mass or more. When the content of the copolymer (A) in the copolymer composition is within the above range, the amount of the low-molecular-weight compound having a molecular weight of less than 1,000 in the copolymer composition becomes relatively small, so that the generation of gas during heating is suppressed, and the molding processability is improved. In addition, the flex resistance of a molded product using the copolymer composition is improved.

### [Weight Average Molecular Weight, Number Average Molecular Weight, and Molecular Weight Distribution of Copolymer (A)]

The weight average molecular weight (Mw) of the copolymer (A) is not particularly limited, and is preferably 30,000 to 3,000,000, more preferably 40,000 to 2,100,000, and further more preferably 50,000 to 1,700,000. When the weight average molecular weight (Mw) of the copolymer (A) is equal to or more than the lower limit value, the flex resistance of the molded product using the copolymer composition is improved, and when it is equal to or less than the upper limit value, the molding processability is improved, and the total light transmittance of the molded product using the copolymer composition is also improved.

The number average molecular weight (Mn) of the copolymer (A) is also not particularly limited, and is preferably 20,000 to 2,000,000, more preferably 30,000 to 1,500,000, and further more preferably 40,000 to 1,200,000. When the number average molecular weight (Mn) of the copolymer (A) is equal to or more than the lower limit value, the flex resistance of the molded product using the copolymer composition is improved, and when it is equal to or less than the upper limit value, the molding processability is improved, and the total light transmittance of the molded product using the copolymer composition is also improved.

The molecular weight distribution (Mw/Mn) of the copolymer (A) is preferably 1.0 to 10.0, more preferably 1.0 to 9.0, and further more preferably 1.0 to 8.0. When Mw/Mn is within the above range, the variation in the viscosity of the copolymer (A) is small, and the handling becomes good. The Mw and Mn of the copolymer (A) are a weight average molecular weight and a number average molecular weight in terms of polystyrene obtained from the measurement of gel permeation chromatography (GPC), and specifically, can be measured by the method described in Examples.

### <Optional Component>

The copolymer composition of the present invention is not particularly limited as long as it contains the copolymer (A), and can further contain a synthetic resin.

Examples of other synthetic resins include a polyolefin resin such as polyethylene, polypropylene, a copolymer of ethylene and one or more α-olefin having 3 to 20 carbon atoms (for example, propylene, 1-butene, 1-pentene, and 1-hexene ), an ethylene-propylene-diene copolymer (EPDM), an ethylene-vinyl acetate copolymer, and an ethylene-acrylic acid copolymer, a polyurethane resin, a polyamide resin, a polyester resin, and a polycarbonate resin.

In the copolymer composition of the present invention, when the amount of the components other than the copolymer (A) is large, the molding processability, the flex resistance, and the like tend to decrease, and therefore, the amount of the components other than the copolymer (A) is preferably small. More specifically, in the copolymer composition of the present invention, the content of low-molecular-weight compound having a molecular weight of less than 1,000 is preferably 10% by mass or less.

The low-molecular-weight compound having a molecular weight of less than 1,000 is often a low-molecular-weight polymer produced as a by-product during the production of the copolymer (A), and when the amount of this low-molecular-weight polymer is reduced, the amount of gas generated is small even when the copolymer composition is heated during processing, and deterioration due to thermal decomposition can be suppressed, so that the molding processability is improved. From this viewpoint, the content of the low-molecular-weight compound having a molecular weight of less than 1,000 is more preferably 8% by mass or less, further more preferably 5% by mass or less, still further more preferably 4% by mass or less, and particularly preferably 3% by mass or less.

Note that the content of the low-molecular-weight compound having a molecular weight of less than 1,000 can be determined by fractionating a component having a molecular weight of 1,000 or more by preparative chromatography, measuring the weight of the dried component, and calculating the difference between the charged weight and the dried weight.

In addition, the copolymer composition of the present invention can further contain other components, if necessary. As the other components, a solvent, a filler, a thickener, an anti-aging agent, a plasticizer, a flame retardant, a stabilizer, an antioxidant, and the like can be contained, and when these optional components are contained, the total content thereof is preferably 5% by mass or less in the total amount of the copolymer composition.

### [Method for Producing Copolymer Composition]

The method for producing the copolymer composition of the present invention is not particularly limited, and for example, a product containing the copolymer (A) obtained by the polymerization of the copolymer (A) can be used as the copolymer composition as it is. However, from the viewpoint of reducing the amount of low-molecular-weight compound having a molecular weight of less than 1,000 contained in the copolymer composition, it is preferable to wash the product containing the copolymer (A) obtained by the polymerization with a solvent other than the solvent used for the polymerization of the copolymer (A).

The washing method is preferably a method in which the product obtained by polymerization is washed with a solvent used for polymerization, such as benzene, toluene, o-xylene, m-xylene, p-xylene, mesitylene, pseudocumene, ethylbenzene, propylbenzene, chlorobenzene, dichlorobenzene, methyl acetate, ethyl acetate, propyl acetate, butyl acetate, methyl propionate, ethyl propionate, n-pentane, n-hexane, n-heptane, or cyclohexane, and then further washed with a solvent selected from a nitrile-based solvent such as acetonitrile, propionitrile, or benzonitrile, an alcohol-based solvent such as methanol, ethanol, n-propanol, isopropanol, n-butanol, isobutanol, sec-butanol, or tert-butanol, and a mixture thereof.

Note that when the copolymer composition contains the optional component, it can be produced by a production method including a mixing step of mixing the optional component with the copolymer (A). The method of mixing each of the components is not particularly limited, and it can be mixed by a known method.

The copolymer composition of the present invention can be used as a coating material and can also be used in the following applications. Specific examples thereof include a film capacitor, an insulating layer of an EL element, an electrostatic induction-type conversion element, a sensor (for example, a touch sensor, a vibration sensor, a biosensor, or a tire sensor (a sensor installed on the inner surface of a tire)), an actuator, a touch panel, a haptic device (a device having a function of feeding back a tactile sense to a user), a vibration power generation device (for example, a vibration power generation floor or a vibration power generation tire), a speaker, and a microphone.

### [Molded Product, Film, Sheet, and Fiber]

In the molded product of the present invention, the copolymer composition of the present invention was used. The shape of the molded product is not limited as long as it is produced using the copolymer composition of the present invention, and examples thereof include various shapes such as a film, a sheet, a fiber, a pellet, a plate, a pipe, a tube, a rod, and a granular body. The method for producing the molded product is not particularly limited, and it can be molded by various conventionally known molding methods such as injection molding, blow molding, press molding, extrusion molding, and calender molding.

In the present invention, among these molded products, a film, a sheet, or a fiber is preferable. As described above, the molded product using the copolymer composition of the present invention can provide a film having more excellent transparency, particularly by being processed into a film.

Note that, in the present invention, the "film" means a membrane-like material having a thickness of less than 250 µm, and the "sheet" means a thin plate-like material having a thickness of 250 µm or more.

The film or the sheet of the present invention preferably has a total light transmittance of 75% or more, more preferably 80% or more, further more preferably 85% or more.

The total light transmission of the film or the sheet in the present invention is a value measured in accordance with JIS K7361-1:1997, and specifically, it can be measured by the method described in Examples.

The thickness of the film or the sheet of the present invention is not particularly limited, and is preferably from 0.0001 to 10.0 mm, preferably from 0.001 to 5.0 mm, more preferably from 0.005 to 1.5 mm, and further more preferably from 0.01 to 1.0 mm, from the viewpoint of achieving both transparency and cutting processability of the film or the sheet.

The method for producing the film or the sheet of the present invention is not particularly limited, and it can be molded by a conventionally known method. Examples of the molding method include a solution casting method, a melt extrusion method, a calender method, a compression molding method, and an injection molding method.

Examples of the molded product using the copolymer composition of the present invention include a film capacitor, an insulating layer of an EL element, an electrostatic induction-type conversion element, a sensor (for example, a touch sensor, a vibration sensor, a biosensor, or a tire sensor (a sensor installed on the inner surface of a tire)), an actuator, a touch panel, a haptic device (a device having a function of feeding back a tactile sense to a user), a vibration power generation device (for example, a vibration power generation floor or a vibration power generation tire), a speaker, and a microphone.

### Examples

Hereinafter, the present invention is described in detail with reference to Examples, but the present invention is not limited to these Examples.

### <Example 1>

Into a 900 ml autoclave equipped with a stirrer and a thermometer, 8.0 g (0.104 mol) of 1,1-dicyanoethylene synthesized by the method described in J. Am. Chem. Soc., 1989, 111, 9078, to 9081, 41.3 g of isobutylene (0.736 mol, manufactured by Tokyo Chemical Industry Co., Ltd.), 27.0 ml of toluene (manufactured by FUJIFILM Wako Pure Chemical Corporation), and 66 mg of azodiisobutyronitrile (manufactured by FUJIFILM Wako Pure Chemical Corporation) were placed and heated and stirred at 60 °C for 4 hours under a nitrogen gas stream to perform radical polymerization to obtain a copolymer composition. After termination of the polymerization, the precipitated copolymer was filtered. Subsequently, the resulting product was washed with toluene (the solvent used for polymerization) and acetonitrile (a solvent other than the solvent used for polymerization, manufactured by FUJIFILM Wako Pure Chemical Corporation) in this order, and then dried overnight at 40 °C under reduced pressure to obtain a product (powder of a resin composition containing the copolymer).

The obtained copolymer composition was placed in a mold form (length 15 cm × width 15 cm × height 0.50 mm) placed between two stainless steel plates (length 35 cm × width 35 cm). This was set in a hot press machine (manufactured by Shinto Metal Industries Ltd.), and the copolymer composition was heated at 175 °C for 3 minutes without applying pressure.

Next, the copolymer composition was hot-pressed at a pressure of 90 kgf/cm² (about 8.8 MPa) for 180 seconds. Immediately thereafter, the stainless steel plates and the mold form were set in a cooling press machine at 23 °C. Pressure was applied to the sheet of the copolymer composition while cooling the sheet with a cooling press machine. Thereafter, the sheet in the mold form was cut out to obtain a sheet having a thickness of 0.5 mm. The following measurements were performed on the obtained copolymer composition and the sheet. The results are shown in Table 1.

### <Examples 2 to 14>

A copolymer composition and a sheet were produced in the same manner as in Example 1 except that the production conditions were changed as shown in Tables 4 to 6. Physical properties of the obtained copolymer composition and sheet were measured in the same manner as in Example 1. The results are shown in Tables 1 to 3.

In addition to the reagents described in Example 1, propylene (manufactured by Takachiho Chemical Industrial Co., Ltd.), styrene (manufactured by FUJIFILM Wako Pure Chemical Corporation), ethyl acetate (manufactured by FUJIFILM Wako Pure Chemical Corporation), dibenzyl ether (manufactured by Tokyo Chemical Industry Co., Ltd.), benzene (manufactured by FUJIFILM Wako Pure Chemical Corporation), 2,2'-azobis (4-methoxy-2,4-dimethylvaleronitrile) (manufactured by FUJIFILM Wako Pure Chemical Corporation), 2,2'-azobis (2,4-dimethylvaleronitrile) (manufactured by FUJIFILM Wako Pure Chemical Corporation), pivaloyl tert-butylperoxide (manufactured by NOF Corporation), and 1,1,3,3-tetramethylbutyl peroxyneodecanoate (manufactured by NOF Corporation) were used as the reagents in the tables.

Note that the temperature (T) in Tables 1 to 3 means "the temperature at which the complex viscosity measured under the conditions of a frequency of 1 Hz and a distortion of 1% becomes 10,000 Pa·s", and the weight reduction rate means "the weight reduction rate (%) when held at the temperature (T) for 30 minutes".

### <Comparative Examples 1 to 4>

A copolymer composition and a sheet were produced in the same manner as in Example 1 except that the production conditions were changed as shown in Tables 4 to 6 and the washing was performed only with the polymerization solvent. Physical properties of the obtained copolymer composition and sheet were measured in the same manner as in Example 1. The results are shown in Tables 1 to 3.

### <Method for Measuring Molar Ratio of Constitutional Unit in Copolymer (A)>

The contents of the constitutional unit (a1) and the constitutional unit (a2) in the copolymer (A) were calculated by measuring the ratio of the signal derived from the methylene group between the constitutional unit (a1) and the constitutional unit (a2) and the signal derived from the functional group of the constitutional unit (a2), which appeared in the vicinity of 1.5 ppm to 3.0 ppm, by ¹H-NMR, based on the following conditions.

### [¹H-NMR Measurement Conditions]

Apparatus: JNM-ECX400 manufactured by JEOL Ltd.
Measurement solvent: Dimethyl Sulfoxide-d6
Measurement temperature: 65 °C
Chemical shift value standard: tetramethylsilane

### <Method for Measuring Weight Average Molecular Weight, Number Average Molecular Weight, and Molecular Weight Distribution>

"HLC-8320" manufactured by Tosoh Corporation was used, and the measurement was performed by adjusting the concentration of sample/tetrahydrofuran = 5 mg/10 mL. Note that, as a developing solution, tetrahydrofuran manufactured by FUJIFILM Wako Pure Chemical Corporation was used.

The weight average molecular weight (Mw), the number average molecular weight (Mn), and the molecular weight distribution (Mw/Mn) were determined by GPC (gel permeation chromatography) in terms of standard polystyrene. The measurement apparatus and conditions are as follows.
· Apparatus: GPC apparatus "HLC-8320" manufactured by Tosoh Corporation
· Separation column: "TSKgelSuperHZM-M" manufactured by Tosoh Corporation
· Eluent: tetrahydrofuran · Eluent flow rate: 0.7 ml/minute
· Sample concentration: 5 mg/10 ml · Column temperature: 40 °C

### <Method for Measuring Temperature (T)>

For the obtained copolymer composition, the temperature (T) at which the complex viscosity measured under conditions of a frequency of 1 Hz and a distortion of 1% became 10,000 Pa·s was measured by the following method.
· Apparatus: "DHR 2" manufactured by TA Instruments
· Measurement jig: upper and lower parallel plates having a diameter of 8 mm
· Frequency: 1 Hz
· Distortion: 1%
· Temperature increase rate 3 °C/min
· Measurement atmosphere: nitrogen gas flow

### <Method for Measuring Content of Low-Molecular-Weight Compound in Copolymer Composition>

For the obtained copolymer composition, the copolymer (A) having a polystyrene-equivalent molecular weight of 1,000 or more was fractionated under the following conditions, the dry weight of the copolymer (A) was measured, and the content of the low-molecular-weight compound was calculated from the difference between the charged weight and the dry weight of the copolymer (A). Note that, for the copolymer compositions of Examples, the measurement was performed on the copolymer compositions after washing with a solvent other than the solvent used for the polymerization.
· Apparatus: Preparative system manufactured by Shimadzu Corporation
   · Liquid delivery pump: LC-6AD
   · Autosampler: SIL-10AP
   · UV detector: SPD-20A
   · Fraction collector: FRC-10A
   · System controller: CBM- 20A
· Separation column: "TSKgel-GMHHR-H" manufactured by Tosoh Corporation
· Eluent: tetrahydrofuran · Eluent flow rate: 6.0 ml/minute
· Sample concentration: 10 mg/ml · Column temperature: 40 °C

### <Method for Measuring Weight Reduction Rate (%) when Held for 30 Minutes at Temperature (T)>

The weight reduction rate of the obtained copolymer composition was measured under the following conditions.
· Measurement apparatus: METTLER TOLEDO TGA/DSC1
· Measurement atmosphere: nitrogen gas flow
· Pan used: alumina pan
· Gas flow rate: 50 mL/min
· Measurement conditions: The weight was measured after holding for 30 minutes at temperature (T). The weight reduction rate was calculated, assuming that the weight at 30 °C was 100%.

### <Method for Determining Presence or Absence of Low-Molecular-Weight Compound in Copolymer Composition Before Washing>

For the obtained copolymer composition, a copolymer composition before washing with a solvent (acetonitrile) other than the solvent used for the polymerization was prepared as a sample. A volatile component generated when each of the prepared samples was heated at the temperatures shown in Tables 1 to 3 was collected in a glass container cooled with liquid nitrogen. For the collected component, the amount of a compound having a molecular weight of less than 1,000 (low-molecular-weight compound) was measured by GPC (gel permeation chromatography) in terms of standard polystyrene and determined according to the following criteria. The results are shown in Tables 1 to 3. The measurement apparatus and conditions are as follows.
· Apparatus: GPC apparatus "HLC-8320" manufactured by Tosoh Corporation
· Separation column: "TSKgelSuperHZM-M" manufactured by Tosoh Corporation
· Eluent: tetrahydrofuran
· Eluent flow rate: 0.7 ml/minute
· Sample concentration: 5 mg/10 ml
· Column temperature: 40 °C

Determination [A]: Low-molecular-weight compound is present
Determination [B]: Low-molecular-weight compound is absent

### <Change in Amount of Low-Molecular-Weight Compound Contained in Copolymer Composition Before and After Washing>

For the obtained copolymer composition, a copolymer composition after washing with a solvent (acetonitrile) other than the solvent used for the polymerization was prepared as a sample. A volatile component generated when each of the prepared samples was heated at the temperatures shown in Tables 1 to 3 was collected in a glass container cooled with liquid nitrogen. For the collected component, the amount of a compound having a molecular weight of less than 1,000 (low-molecular-weight compound) was measured by GPC (gel permeation chromatography) in terms of standard polystyrene, and the change in the amount of the low-molecular-weight compound before and after washing was determined according to the following criteria. The results are shown in Tables 1 to 3. The measurement apparatus and conditions are as follows.
· Apparatus: GPC apparatus "HLC-8320" manufactured by Tosoh Corporation
· Separation column: "TSKgelSuperHZM-M" manufactured by Tosoh Corporation
· Eluent: tetrahydrofuran
· Eluent flow rate: 0.7 ml/minute
· Sample concentration: 5 mg/10 ml
· Column temperature: 40 °C

Determination [A]: The amount of compound having a molecular weight of less than 1,000 was reduced before and after the washing. (The amount of compound having a molecular weight of less than 1,000 could be reduced by washing.)
Determination [B]: The amount of compound having a molecular weight of less than 1,000 was not reduced before and after the washing. (The amount of compound having a molecular weight of less than 1,000 could not be reduced by washing.)
Determination [-]: No washing was performed.

### <Evaluation Method of Melt Moldability>

The obtained sheet was observed, and the melt moldability was evaluated according to the following criteria.
Determination [A]: There was no unmelted powder of the copolymer in the sheet, the copolymer was sufficiently melted, and a sheet having an area of 90 to 100% with respect to the mold form having an area of a length of 15 cm × a width of 15 cm was obtained.
Determination [B]: There was no unmelted powder of the copolymer in the sheet, the copolymer was melted, and a sheet having an area of 50 to 89% with respect to a mold form having an area of a length of 15 cm × a width of 15 cm was obtained.
Determination [C]: Unmelted powder of the copolymer, a color defect or foaming due to decomposition or thermal degradation of the copolymer was observed in the sheet, or a sheet having an area of less than 50% of the area with respect to a mold form having an area of a length of 15 cm × a width of 15 cm was obtained.

### < Measuring Method of Total Light Transmission>

The total light transmission of the obtained sheet having a thickness of 0.5 mm was measured under the following conditions.
· Measurement apparatus: Haze meter SH7000 (manufactured by Nippon Denshoku Industries Co., Ltd.)
· Measurement Conditions: JIS K7361-1:1997

### <Evaluation Method of Flex Resistance>

The obtained sheet was cut into the 10 cm square, and bending at the curvature radius of 80 mm was repeated 50 times, and a sheet that could be bent without cracking was evaluated as "A" for flexibility, a sheet that could be bent without cracking 5 times or more and less than 50 times was evaluated as "B" for flexibility, and a sheet that cracked with less than 5 times was evaluated as "C" for poor flexibility.

### [Table 1]

**Table 1**

| | | Examples | | | |
|---|---|---|---|---|---|
| | | 1 | 2 | 3 | 4 |
| | Kind of Constitutional Unit (a2) | Isobutylene | Isobutylene | Isobutylene | Isobutylene |
| | Molar Ratio [(a1)/(a2)] | 48/52 | 49/51 | 51/49 | 50/50 |
| Copolymer (A) | Weight Average Molecular Weight (Mw) | 370,000 | 610,000 | 740,000 | 810,000 |
| | Number Average Molecular Weight (Mn) | 150,000 | 250,000 | 260,000 | 140,000 |
| | Mw/Mn | 2.5 | 2.4 | 2.8 | 5.8 |
| | Content of Low-Molecular-Weight Compound [% by Mass] | 6 | 1 | 1 | 1 |
| | Temperature (T) [°C] | 175 | 223 | 225 | 215 |
| | Weight Reduction Rate [%] | 0.4 | 2.0 | 2.0 | 2.0 |
| Copolymer Composition | Presence or Absence of Low-Molecular-Weight Compound Before Washing | A | A | A | A |
| | Change in Amount of Low-Molecular-Weight Compound Before and After Washing | A | A | A | A |
| Thickness of Sheet [mm] | | 0.5 | 0.5 | 0.5 | 0.5 |
| | Melt Moldability | A | A | A | A |
| Evaluation | Total Light Transmission [%] | 90 | 90 | 88 | 88 |
| | Flex Resistance | A | A | A | A |

**[Table 1 (continued)]**

| Table 1 | | | | |
|---|---|---|---|---|
| | | Examples | | |
| | | 5 | 6 | 7 |
| | Kind of Constitutional Unit (a2) | Isobutylene | Isobutylene | Isobutylene |
| | Molar Ratio [(a1)/(a2)] | 50/50 | 50/50 | 52/48 |
| Copolymer (A) | Weight Average Molecular Weight (Mw) | 1,210,000 | 2,040,000 | 118,000 |
| | Number Average Molecular Weight (Mn) | 240,000 | 1,080,000 | 54,000 |
| | Mw/Mn | 5.0 | 1.9 | 2.2 |
| | Content of Low-Molecular-Weight Compound [% by Mass] | 4 | 1 | 2 |
| | Temperature (T) [°C] | 215 | 250 | 148 |
| Copolymer Composition | Weight Reduction Rate [%] | 2.4 | 3.0 | 0.2 |
| | Presence or Absence of Low-Molecular-Weight Compound Before Washing | A | A | A |
| | Change in Amount of Low-Molecular-Weight Compound Before and After Washing | A | A | A |
| Thickness of Sheet [mm] | | 0.5 | 0.5 | 0.5 |
| | Melt Moldability | B | B | A |
| Evaluation | Total Light Transmission [%] | 84 | 79 | 88 |
| | Flex Resistance | A | B | B |

### [Table 2]

**Table 2**

| | | Examples | | | |
|---|---|---|---|---|---|
| | | 8 | 9 | 10 | 11 |
| | Kind of Constitutional Unit (a2) | Propylene | Propylene | Propylene | Propylene |
| | Molar Ratio [(a1)/(a2)] | 49/51 | 50/50 | 50/50 | 50/50 |
| Copolymer (A) | Weight Average Molecular Weight (Mw) | 224,000 | 790,000 | 1,070,000 | 87,000 |
| | Number Average Molecular Weight (Mn) | 67,000 | 82,000 | 462,000 | 31,000 |
| | Mw/Mn | 3.3 | 9.6 | 2.3 | 2.8 |
| | Content of Low-Molecular-Weight Compound [% by Mass] | 10 | 6 | 6 | 6 |
| | Temperature (T) [°C] | 145 | 200 | 250 | 140 |
| Copolymer Composition | Weight Reduction Rate [%] | 0.5 | 3.0 | 4.8 | 0.5 |
| | Presence or Absence of Low-Molecular-Weight Compound Before Washing | A | A | A | A |
| | Change in Amount of Low-Molecular-Weight Compound Before and After Washing | A | A | A | A |
| Thickness of Sheet [mm] | | 0.5 | 0.5 | 0.5 | 0.5 |
| | Melt Moldability | A | A | B | A |
| Evaluation | Total Light Transmission [%] | 89 | 88 | 84 | 89 |
| | Flex Resistance | A | A | A | B |

**[Table 2 (continued)]**

| Table 2 | | | | |
|---|---|---|---|---|
| | | Examples | | |
| | | 12 | 13 | 14 |
| | Kind of Constitutional Unit (a2) | Isobutylene | Styrene | Styrene |
| | Molar Ratio [(a1)/(a2)] | 49/51 | 50/50 | 50/50 |
| Copolymer (A) | Weight Average Molecular Weight (Mw) | 610,000 | 284,000 | 510,000 |
| | Number Average Molecular Weight (Mn) | 250,000 | 128,000 | 176,000 |
| | Mw/Mn | 2.4 | 2.2 | 2.9 |
| | Content of Low-Molecular-Weight Compound [% by Mass] | 6 | 1 | 2 |
| | Temperature (T) [°C] | 175 | 220 | 230 |
| Copolymer Composition | Weight Reduction Rate [%] | 0.5 | 0.2 | 0.2 |
| | Presence or Absence of Low-Molecular-Weight Compound Before Washing | A | A | A |
| | Change in Amount of Low-Molecular-Weight Compound Before and After Washing | A | A | A |
| Thickness of Sheet [mm] | | 10 | 0.5 | 0.5 |
| | Melt Moldability | A | A | A |
| Evaluation | Total Light Transmission [%] | 85 | 88 | 88 |
| | Flex Resistance | B | A | A |

### [Table 3]

**Table 3**

| | | Comparative Examples | | | |
|---|---|---|---|---|---|
| | | 1 | 2 | 3 | 4 |
| | Kind of Constitutional Unit (a2) | Isobutylene | Isobutylene | Propylene | Styrene |
| | Molar Ratio [(a1)/(a2)] | 51/49 | 53/47 | 50/50 | 51/49 |
| Copolymer (A) | Weight Average Molecular Weight (Mw) | 1,810,000 | 1,850,000 | 1,450,000 | 973,000 |
| | Number Average Molecular Weight (Mn) | 280,000 | 250,000 | 240,000 | 420,000 |
| | Mw/Mn | 6.5 | 7.4 | 6.0 | 2.3 |
| | Content of Low-Molecular-Weight Compound [% by Mass] | 15 | 15 | 17 | 13 |
| | Temperature (T) [°C] | 250 | 250 | 250 | 230 |
| Copolymer Composition | Weight Reduction Rate [%] | 7.0 | 7.2 | 6.1 | 9.9 |
| | Presence or Absence of Low-Molecular-Weight Compound Before Washing | A | A | A | A |
| | Change in Amount of Low-Molecular-Weight Compound Before and After Washing | - | - | - | - |
| Thickness of Sheet [mm] | | 0.5 | 0.5 | 0.5 | 0.5 |
| | Melt Moldability | C (Foaming) | C (Foaming) | C (Foaming) | C (Foaming) |
| Evaluation | Total Light Transmission [%] | 64 | 69 | 65 | 60 |
| | Flex Resistance | C | C | C | C |

As described above, the production conditions in Examples and Comparative Examples are shown in Tables 4 to 6.

### [Table 4]

**Table 4**

| | | Unit | Examples | | | |
|---|---|---|---|---|---|---|
| | | | 1 | 2 | 3 | 4 |
| | 1,1-dicyanoethylene | g | 8.0 | 8.0 | 8.0 | 8.0 |
| Copolymer (A) | Isobutylene | g | 41.3 | 16.0 | 42.7 | 12.3 |
| | Propylene | g | - | - | - | - |
| | Styrene | g | - | - | - | - |
| | Ethyl Acetate | mL | - | - | 29.2 | 38.8 |
| Solvent | Toluene | mL | 27.0 | 71.0 | - | - |
| | Dibenzyl Ether | mL | - | - | - | - |
| | Benzene | mL | - | - | - | - |
| | Azodiisobutyronitrile | mg | 66 | 66 | 75 | - |
| | 2,2'-azobis (4-methoxy-2,4-dimethylvaleronitrile) | mg | - | - | - | 50 |
| Initiator | 2,2'-azobis (2,4-dimethylvaleronitrile) | mg | - | - | - | - |
| | Pivaloyl tert-butylperoxide | mg | - | - | - | - |
| | 1,1,3,3-tetramethylbutyl peroxyneodecanoate | mg | - | - | - | - |
| | Polymerization Temperature | °C | 60 | 60 | 60 | 40 |
| Conditions | Polymerization Time | hr | 4 | 8 | 4 | 4 |
| | Ratio of Charged Amounts (Equivalent Ratio) [(A):(B)] | - | 1:7.2 | 1:2.8 | 1:7.4 | 1:2.1 |

**[Table 4 (continued)]**

| Table 4 | | | | | |
|---|---|---|---|---|---|
| | | Unit | Examples | | |
| | | | 5 | 6 | 7 |
| | 1,1-dicyanoethylene | g | 8.0 | 8.0 | 8.0 |
| Copolymer (A) | Isobutylene | g | 43.4 | 12.3 | 14.4 |
| | Propylene | g | - | - | - |
| | Styrene | g | - | - | - |
| | Ethyl Acetate | mL | 26.7 | 38.8 | - |
| Solvent | Toluene | mL | - | - | 22.8 |
| | Dibenzyl Ether | mL | - | - | 12.1 |
| | Benzene | mL | - | - | - |
| | Azodiisobutyronitrile | mg | - | - | - |
| | 2,2'-azobis (4-methoxy-2,4-dimethylvaleronitrile) | mg | 70 | 50 | - |
| Initiator | 2,2'-azobis (2,4-dimethylvaleronitrile) | mg | - | - | - |
| | Pivaloyl tert-butylperoxide | mg | - | - | 159 |
| | 1,1,3,3-tetramethylbutyl peroxyneodecanoate | mg | - | - | - |
| | Polymerization Temperature | °C | 40 | 40 | 40 |
| Conditions | Polymerization Time | hr | 8 | 8 | 8 |
| | Ratio of Charged Amounts (Equivalent Ratio) [(A):(B)] | - | 1:7.6 | 1:2.1 | 1:2.5 |

### [Table 5]

**Table 5**

| | | Unit | Examples | | | |
|---|---|---|---|---|---|---|
| | | | 8 | 9 | 10 | 11 |
| | 1,1-dicyanoethylene | g | 8.0 | 8.0 | 8.0 | 8.0 |
| Copolymer (A) | Isobutylene | g | - | - | - | - |
| | Propylene | g | 32.4 | 75.1 | 26.3 | 8.3 |
| | Styrene | g | - | - | - | - |
| | Ethyl Acetate | mL | - | - | 38.8 | - |
| Solvent | Toluene | mL | 24.0 | 43.9 | - | 22.3 |
| | Dibenzyl Ether | mL | - | - | - | - |
| | Benzene | mL | - | - | - | - |
| | Azodiisobutyronitrile | mg | 309 | - | - | - |
| | 2,2'-azobis (4-methoxy-2,4-dimethylvaleronitrile) | mg | - | - | 160 | 27 |
| Initiator | 2,2'-azobis (2,4-dimethylvaleronitrile) | mg | - | - | - | - |
| | Pivaloyl tert-butylperoxide | mg | - | - | - | - |
| | 1,1,3,3-tetramethylbutyl peroxyneodecanoate | mg | - | 67 | - | - |
| | Polymerization Temperature | °C | 60 | 40 | 40 | 40 |
| Conditions | Polymerization Time | hr | 4 | 4 | 4 | 4 |
| | Ratio of Charged Amounts (Equivalent Ratio) [(A):(B)] | - | 1:7.5 | 1:17 | 1:6.1 | 1:1.9 |

**[Table 5 (continued)]**

| Table 5 | | | | | |
|---|---|---|---|---|---|
| | | Unit | Examples | | |
| | | | 12 | 13 | 14 |
| | 1,1-dicyanoethylene | g | 8.0 | 8.0 | 8.0 |
| Copolymer (A) | Isobutylene | g | 16.0 | - | - |
| | Propylene | g | - | - | - |
| | Styrene | g | - | 10.7 | 10.5 |
| | Ethyl Acetate | mL | - | - | - |
| Solvent | Toluene | mL | 71.0 | 44.7 | 84.6 |
| | Dibenzyl Ether | mL | - | - | - |
| | Benzene | mL | - | - | - |
| | Azodiisobutyronitrile | mg | 66 | - | - |
| | 2,2'-azobis (4-methoxy-2,4-dimethylvaleronitrile) | mg | - | 108 | 92 |
| Initiator | 2,2'-azobis (2,4-dimethylvaleronitrile) | mg | - | - | - |
| | Pivaloyl tert-butylperoxide | mg | - | - | - |
| | 1,1,3,3-tetramethylbutyl peroxyneodecanoate | mg | - | - | - |
| | Polymerization Temperature | °C | 60 | 40 | 40 |
| Conditions | Polymerization Time | hr | 8 | 2.5 | 2.5 |
| | Ratio of Charged Amounts (Equivalent Ratio) [(A):(B)] | - | 1:2.8 | 1:1 | 1:1 |

### [Table 6]

**Table 6**

| | | Unit | Comparative Examples | | | |
|---|---|---|---|---|---|---|
| | | | 1 | 2 | 3 | 4 |
| | 1,1-dicyanoethylene | g | 8.0 | 8.0 | 8.0 | 8.0 |
| Copolymer (A) | Isobutylene | g | 11.7 | 5.3 | - | - |
| | Propylene | g | - | - | 52.0 | - |
| | Styrene | g | - | - | - | 40.0 |
| | Ethyl Acetate | mL | - | - | - | - |
| Solvent | Toluene | mL | - | - | - | - |
| | Dibenzyl Ether | mL | - | - | - | - |
| | Benzene | mL | 65.9 | 66.6 | 50.0 | 110.7 |
| | Azodiisobutyronitrile | mg | - | - | - | - |
| | 2,2'-azobis (4-methoxy-2,4-dimethylvaleronitrile) | mg | - | - | - | - |
| Initiator | 2,2'-azobis (2,4-dimethylvaleronitrile) | mg | 24 | 16 | 96 | - |
| | Pivaloyl tert-butylperoxide | mg | - | - | - | - |
| | 1,1,3,3-tetramethylbutyl peroxyneodecanoate | mg | - | - | - | - |
| | Polymerization Temperature | °C | 45 | 45 | 43 | 0 |
| Conditions | Polymerization Time | hr | 20 | 20 | 20 | 48 |
| | Ratio of Charged Amounts (Equivalent Ratio) [(A):(B)] | - | 1:2 | 1:0.9 | 1:12 | 1:3.7 |

As is clear from the results in Tables 1 to 3, the copolymer composition of the present invention can provide a sheet or the like having good molding processability and excellent flex resistance. It can be seen that the copolymer compositions of Comparative Examples were inferior in molding processability because foaming occurred during melt molding.

## Claims

1. A copolymer composition comprising a copolymer (A) having a constitutional unit (a1) derived from 1,1-dicyanoethylene and a constitutional unit (a2) derived from a compound represented by general formula (I) below,
wherein a weight reduction rate is 5.0% by mass or less when held for 30 minutes at a temperature (T) at which a complex viscosity measured under conditions of a frequency of 1 Hz and a distortion of 1% becomes 10,000 Pa·s:
CH₂=CR¹R² (I)
wherein, R¹ represents one or more selected from a hydrogen atom, an alkyl group, a cycloalkyl group, an aryl group, an alkoxy group, and a halogen atom, and
R² represents one or more selected from a hydrogen atom, an alkyl group, an alkoxy group, a carboxy group, an ester group represented by -COOR³, in which R³ represents an alkyl group having 1 to 12 carbon atoms, an acid anhydride group, an acyl group represented by - COR⁴, in which R⁴ represents an alkyl group having 1 to 12 carbon atoms, and an acyloxy group represented by -OCOR⁵, in which R⁵ represents an alkyl group having 1 to 12 carbon atoms.

2. The copolymer composition according to Claim 1, wherein the copolymer (A) has a weight average molecular weight of 30,000 to 3,000,000.

3. The copolymer composition according to Claim 1, wherein a content of a low-molecular-weight compound having a molecular weight of less than 1,000 is 10% by mass or less.

4. The copolymer composition according to Claim 1, wherein a content of the constitutional unit (a1) in the copolymer (A) is 20 to 80 mol%.

5. The copolymer composition according to Claim 1, wherein the copolymer (A) has a molecular weight distribution (Mw/Mn) of 1.0 to 10.0.

6. The copolymer composition according to Claim 1, wherein the compound represented by the general formula (I) is one or more selected from the group consisting of vinyl ester, (meth)acrylic acid ester, a styrene derivative, ethylene, propylene, isobutylene, 1-pentene, 1-hexene, 3-methyl-1-butene, and 4-methyl-1-pentene.

7. A molded product using the copolymer composition according to any one of Claims 1 to 6.

8. A film or a sheet using the copolymer composition according to any one of Claims 1 to 6 and having a thickness of 0.0001 to 10.0 mm.

9. The film or the sheet according to Claim 8, having a total light transmittance of 75% or more.

10. A fiber using the copolymer composition according to any one of Claims 1 to 6.

11. A method for producing the copolymer composition according to any one of Claims 1 to 6, wherein a product containing the copolymer (A) obtained by polymerization is washed with a solvent other than a solvent used for the polymerization of the copolymer (A).
